# EUROPEAN PATENT SPECIFICATION

(11) **EP 3 031 782 B1**
(45) Date of publication and mention of the grant of the patent: **16.08.2017**
(21) Application number: 15195277.7
(22) Date of filing: 19.11.2015
(51) Int. Cl.: C02F 9/00, C02F 1/40, C02F 103/18, C02F 11/12, C02F 1/28, C02F 101/10, C02F 1/72, C02F 1/52, C02F 101/32, C02F 1/00, C02F 1/66

(54) **PLANT AND METHOD FOR THE ABATEMENT OF POLLUTANTS IN FUMES AND PROCESS WATER COMING FROM A RECYCLING UNIT OF RUBBER RESIDUES**
ANLAGE UND VERFAHREN ZUR SCHADSTOFFMINDERUNG IN DÄMPFEN UND PROZESSWASSER AUS EINER RECYCLINGEINHEIT VON GUMMIRÜCKSTÄNDEN
INSTALLATION ET PROCÉDÉ POUR LA RÉDUCTION DE POLLUANTS DANS DES GAZ BRÛLÉS ET L'EAU DE TRAITEMENT PROVENANT D'UNE UNITÉ DE RECYCLAGE DE RÉSIDUS DE GOMME

(30) Priority: 09.12.2014 IT MI20142108
(43) Date of publication of application: 15.06.2016
(73) Proprietor: Producta S.A.S. di Ladikos Elefterios & C., 62010 Montelupone - Macerata (IT)
(72) Inventor: LADIKOS, Eleftherios, 62019 RECANATI (IT)
(74) Representative: Giuli, Maurizio Mario Galdino

(56) References cited:
- EP-A1- 1 201 389
- WO-A1-02/38276
- DE-A1-102011 082 769
- DATABASE WPI Week 201465 Thomson Scientific, London, GB; AN 2014-R93482 XP002743125, -& CN 203 694 857 U (HEHAI RUBBER & PLASTIC EQUIP MFG CO LTD) 9 July 2014 (2014-07-09)
- FUKUMORI K ET AL: "DYNAMIC DEVULCANIZATION AND DYNAMIC VULCANIZATION FOR RECYCLING OF CROSSLINKED RUBBER", KAUTSCHUK UND GUMMI - KUNSTSTOFFE, HUTHIG VERLAG, HEIDELBERG, DE, vol. 59, no. 7/08, 1 July 2006 (2006-07-01), pages 405-411, XP001244731, ISSN: 0948-3276

## Description

The present invention relates to a plant and method for the abatement of pollutants in fumes and process water coming from a recycling unit of rubber residues.

Technologies and plants for the production of seals and extruded profiles in PVC, nylon, silicon rubber and EPDM, for a wide variety of industrial sectors, among which the building industry, shipbuilding, automotive industry and household appliances, have been developed over the years.

EPDM extruded products have a series of physical-mechanical characteristics indicated as being definitive when a step technically defined as "vulcanization" is effected after their extrusion (Goodyear process).

In this phase, the rubber molecules are chemically bound to sulfur by heating with a modification in the molecular structure of the polymer.

This causes an increase in the elasticity and tensile strength, with the suppression of negative properties, such as abrasiveness and tackiness, in addition to a greater resistance to the effects of atmospheric oxygen and numerous chemical substances.

At the end of the working process, the scraps of vulcanized rubber are currently disposed of in landfills, as the type of bond between the molecular chains prevents them from being re-used with traditional methods. As far as PVC plastic residues (plastic material) and Nylon (engineering polymer) are concerned, these can be recycled and treated so as to obtain virgin material to be re-introduced into the production cycle.

The problem of the disposal of EPDM (ethylene-propylene-diene polymer) vulcanized rubber is, however, different.

As already indicated, in fact, scraps of products produced with this vulcanized material are currently considered as being unusable and are disposed of in landfills or attempts are made to treat them but with intolerably high costs for allowing their re-use.

This also creates a considerable problem of an environmental nature, in addition, as already mentioned, to a constant and significant cost item, due to both the waste of potentially recoverable material and also with respect to the increasingly difficult and costly disposal, also polluting for the environment.

In view of what is indicated above, a search for innovative technologies is underway, which is suitable for finding solutions that allow the recycling of rubber scraps of this particular material, such as EPDM, which is among the most-widely used synthetic rubbers in the world.

This research tends to find and develop an alternative solution to that of traditional disposal in landfills, which is naturally capable of respecting motivated requests of the environmental type, in addition to having a return and economic advantage, and also to be able to re-use the scraps, in substitution, for example, of virgin polymer, avoiding their current disposal in landfills and consequently management as hazardous waste.

For this purpose, the development of specific operational lines is envisaged, for the treatment, by means of appropriate thermal and mechanical processes, of EPDM vulcanized rubber residues, for obtaining a devulcanized material. The material obtained from a regeneration process is almost similar to the characteristics of the original elastomer and which can therefore be used for the formulation of blends and for the production of articles with similar characteristics.

In these lines, treatment must be applied which is capable of breaking the sulfur-based bonds (devulcanization process) obtaining a "regenerated" material.

Some tested solutions and attempts so far made, exploit the extruder technology.

In order to implement this, efforts have been mainly focused on the development of the chemical component of the process, examining and testing various devulcanizing agents (such as amines, CO2, etc.) and various introduction modes of these into the extrusion cycle, ignoring, however, the thermo-mechanical component of the process.

The processing of the above materials has so far been effected by means of extrusion devices connected to a specific degassing plant for evacuating the sulfur fumes released during the process. The study and development of extruders is still underway whereas the problem of the exhaust fumes has now been taken into consideration.

In addition to the study, projecting and development of the parts and components of a special plant of this type, identifying a suitable treatment of the sulfur fumes formed on-line and of the process water is therefore equally important.

The absence of adequate abatement systems, specific for substances deriving from the regeneration steps of rubber and cooling-treatment water, lead, in fact, to the onset of problems relating to the presence of odorous substances present in significant quantities in both the fumes and process water.

The construction of a specific and functional plant for the abatement of fumes and aeration of the environment during the production phase appears to be relatively problematic on the basis of current knowledge and technological offers present on the market. The treatment of the process water is equally problematic.

This is a highly critical phase due to the fact that, as previously indicated, a degassing and fume absorption group is fundamental during the devulcanization process in which sulfur is substantially released. In this process in particular, chemical substances are released with mainly sulfur-based functional groups, such as sulfides, polysulfides, mercaptans, in addition to amines and hydroxy compounds, acid compounds as well as common oil mists typical of rubber processings. This problem can also be extended to the process water englobing these solid and gaseous pollutants.

It should in fact be pointed out that the lack of a specific purifying system or process leads to the result that the water used in the steps for both the abatement of fumes and for cooling the regeneration plant, reaches saturation in a few hours. This saturation generated by organic and oily substances produced by the abatement of extrusion fumes, causes a loss in the purifying efficiency of the abatement plant and in general acts negatively on the performances of the whole fume abatement process.

WO 02/38276 A1 relates to a plant for the abatement of pollutants in extruder emissions in which scraps of plastic material are treated for the recovery of the plastic material.

DATABASE WPI Week 201465 Thomson Scientific London GB AN 2014-R93482 & CN 203 694 857 U relates to the treatment of gases emitted by the treatment of plastic material in a washing tower in which the washing liquid is sent back to the tower.

A general objective of the present invention is to solve the drawbacks of the known art described above in an extremely simple, economic and particularly functional manner.

Another objective of the present invention is to provide a plant and method for the abatement of pollutants in fumes and process water coming from a recycling unit of rubber residues, in particular EPDM vulcanized rubber (ethylene-propylene-diene polymer).

A further objective of the present invention is to provide a plant with easy and simple maintenance and which has relatively low functioning costs.

Yet another objective of the present invention is to identify a plant and method for the abatement of pollutants in fumes and process water coming from a recycling unit of rubber residues, which is capable of eliminating all problems of pollution of both the air and water, avoiding the collection and elimination of process water.

In view of the above objectives, according to the present invention, a plant and method for the abatement of pollutants in fumes and process water coming from a recycling unit of rubber residues has been conceived, having the characteristics indicated in the enclosed claims.

The structural and functional characteristics of the present invention and its advantages with respect to the known art will appear even more evident from the following description, referring to the enclosed drawings, which, *inter alia*, show an embodiment of a plant and method for the abatement of pollutants in fumes and process water coming from a recycling unit of rubber residues produced according to the same invention.

In the drawings:

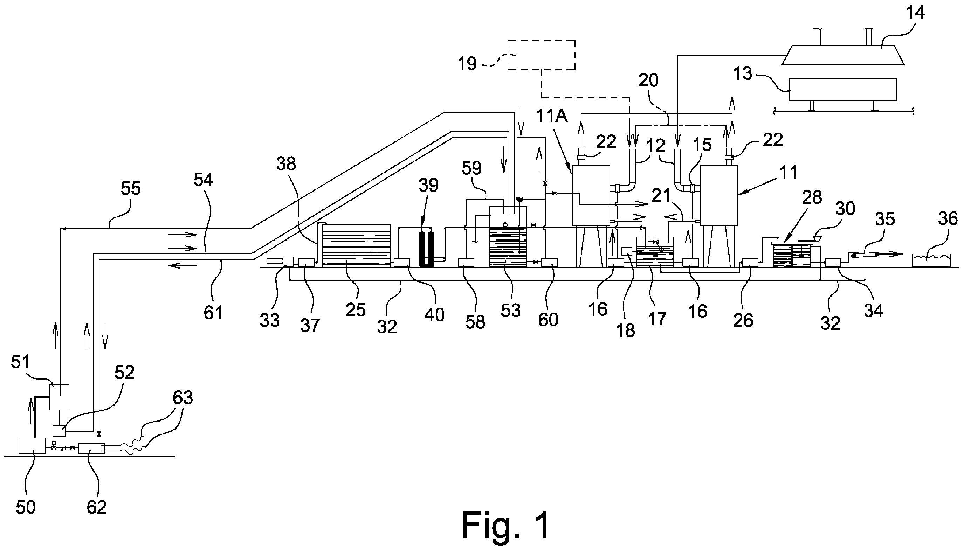

- figure 1 is a raised schematic view showing a plant for the abatement of pollutants in fumes and process water produced according to the invention;

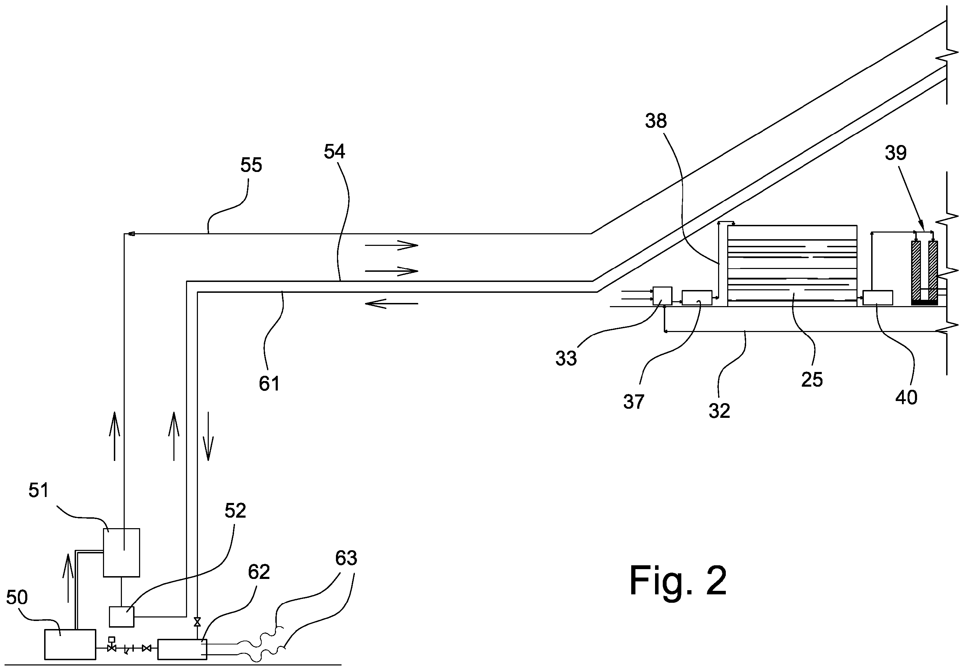

- figure 2 is an enlarged raised schematic view of a first part of the group shown in figure 1 for a better understanding;

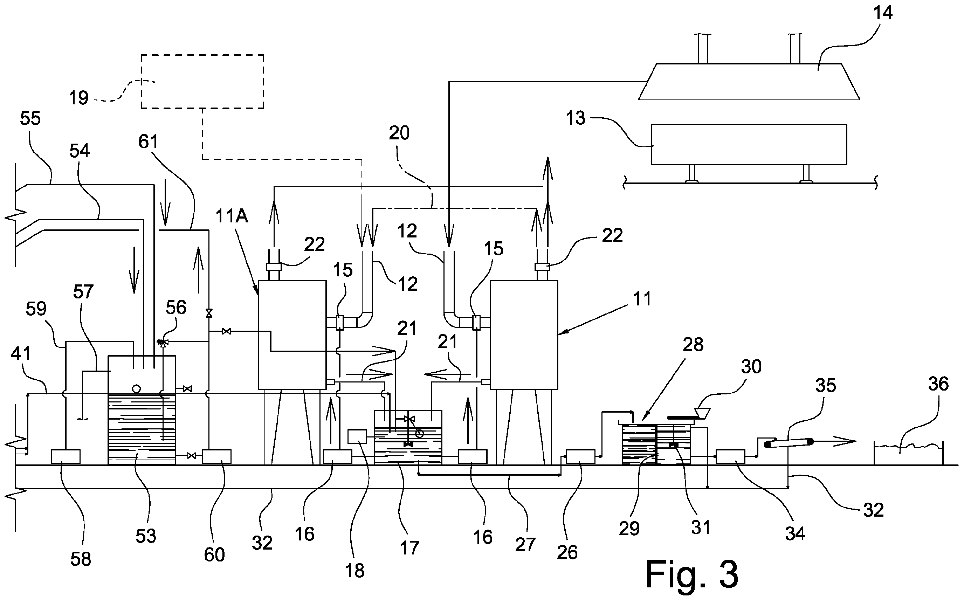

- figure 3 is an enlarged raised schematic view of a second part of the group shown in figure 1 for a better understanding;

With reference to what is shown in the figure, this schematically illustrates a plant for the abatement of pollutants in fumes and process water coming from a recycling unit of rubber residues, in particular EPDM vulcanized rubber (ethylene-propylene-diene polymer).

According to the present invention, in addition to the plant, a new method for the abatement of pollutants in fumes has also been conceived, with the use of a Venturi system in the inlet chamber of the gaseous effluent. In this way, the elimination of the polluting substances and continued abatement efficiency of the Venturi system take place through the removal, by clariflocculation with a suitable denaturing flocculant, of the substances present in the emulsified and oily phase, and degrading the presence of odorous organic substances in the water used, through appropriate oxidizing agents.

It is thus envisaged that the portion of the group used for the wet scrubbing of fumes consists of at least one washing tower 11, for example of the Scrubber-Venturi type, capable of treating a significant quantity of gaseous effluent. Said group is capable of lowering the concentration of substances present in a gaseous stream, normally powders and acid micro-pollutants. The presence of a second washing tower 11A, for example, also enables powders and micro-pollutants coming from a production plant of EPDM vulcanized rubber (ethylene-propylene-diene polymer) to be abated, such as profiled sections or the like, schematically indicated in 19. The second washing tower 11A can alternatively and advantageously potentiate the abatement action exerted by the first washing tower 11 by passing the fumes emitted and coming from the first washing tower, through the same (according to the dashed and dotted line 20) for a "deeper" treatment of the product coming from the regeneration unit.

In general, the washing tower 11 receives, in an inlet pipe 12, the fumes (gas and powders) coming from the processings, from a regeneration extruder 13 (for the sake of convenience, schematized in the upper part of the scheme) captured by a suction hood schematized in 14. Said regeneration extruder 13 treats finely shredded processing scraps of EPDM vulcanized rubber (ethylene-propylene-diene polymer).

The wet scrubbing group of fumes envisages the implementation of a new and original abatement process of fumes and recovery and purification of water for cooling the extruder.

Consequently, the fumes and powders coming from at least one suction hood 14, positioned above the regeneration extruder 13, are first of all sent to the washing tower 11 through the fume inlet pipe 12 into a specific abatement chamber (not shown). In particular, it has been found that the provision of a Venturi water jet 15 fed by an atomizing pump 16 is envisaged in said inlet pipe 12, to try and effect the abatement of the content of all the contents of the fumes extracted.

The atomizing pump 16 is connected on the suction side to a water tank 17, fed at least with water leaving the washing tower 11 specifically envisaged for feeding the fume abatement. Said water tank 17 also mixes clean network water with hydrogen peroxide introduced by means of a dosage pump 18 fed from a specific hydrogen peroxide tank (not shown for the sake of simplicity). Once the purification process has been started, further feeding pipes of filtered recovery water are connected to said fume abatement water tank 17, as illustrated hereunder. A first inlet pipe 21 to said water tank 17 is an outlet pipe from the washing tower 11.

With respect to the presence of the Venturi water jet 15, it causes the particles contained in the inlet fumes to come into close contact with the water jet, which is pressurized, pressurized water that has been sucked from the fume abatement water tank 17 by means of an atomizing pump 16.

The separation of the gaseous phase from the powders absorbed takes place by gravity: the liquid part, containing the powders, descends towards the lower area of the chamber of the washing tower 11, whereas the gaseous part (purified) is sucked by a fan, schematized in 22, and exits from the chimney (not shown).

The water, containing the extracted powders, is sent, as can be seen more clearly further on, from the scrubber to the fume abatement water tank 17 generally containing "dirty water".

A completely similar arrangement of parts can also be repeated for the second washing tower 11A where the same elements are indicated with the same reference numbers.

According to the present invention, the polluting substances must be subsequently eliminated and the abatement efficiency of the washing towers 11, 11A (with a Scrubber-Venturi system), maintained.

This is achieved with the removal, by clariflocculation with a suitable denaturing flocculant, of the substances present in the emulsified and oily phase, and degrading the presence of odorous organic substances in the water used, through appropriate oxidizing agents.

According to the present invention, in addition to optimizing the abatement method of fumes, a method has also been conceived for recovering the water used in the recovery and regeneration process of the rubber residues indicated above, lowering water consumptions and avoiding the elimination of more or less polluted water.

For this specific purpose, the necessity has been found, in implementing the method of the invention, of providing an accumulation tank 25, for example with a volume equal to about 5 mc, where both the water from the washing and scrubbing towers (described above) and also the process water for the regeneration of rubber, are sent, and which will be described in more detail hereunder.

This is to ensure that this water is purified with a continuous cycle during the abatement activity and regeneration processing in order to keep it suitable for being re-used, and producing a closed purification cycle according to the present invention.

As far as the water leaving the fume abatement water tank 17 is concerned, it can be observed from the schemes that this is sent through a connection pipe 27 and with an appropriate booster pump 26 to a subgroup of the plant suitable for purifying the water.

This subgroup of the water treatment plant is composed of a process tank 28, for example circular, divided into two parts by a steel septum 29.

The water is subjected to a first oil-removal treatment in a first part of the process tank 28, aimed at removing the supernatant portion of the oils with separation by density.

In a second part of the process tank 28 of the water, using a dosage device 30 of a denaturing flocculating agent in powder form and mixing in continuous by means of a low-velocity blade mixer 31, the emulsified oily fraction which cannot be removed by simple separation, is removed.

After the addition of the flocculating agent, the treated water is decanted to allow the sludge separated by gravity to settle on the tilted bottom of the second part of the process tank 28.

The treated water leaving the process tank 28 is sent by means of a pipe 32 and joined in a collection well 33 and is then sent into the accumulation tank 25 indicated above.

The sludge produced, on the other hand, is sent by means of the booster pump 34 to a filter tape 35 which allows separation between the solid fraction (sludge) in a specific disposal container 36, and the residual liquid fraction evacuated from the pipe 32. In particular, the latter, for example, is dropped into the above-mentioned collection well 33 and in turn, is lifted by means of a submerged pump 37 into the accumulation tank 25. Rainwater and water deriving from possible losses or leakages of the plant are also collected in said collection and convergence well 33, in addition to the water arriving from the process tank 28 and from the filter tape 35 of the part of the plant suitable for water purification. All of these flows are then sent through the pipe 38 into the above-mentioned accumulation tank 25.

The water present in said accumulation tank 25 is sent by means of a pump 40 to a specific combined "quartzite-activated carbon" double-column filtration unit 39 which completes the purification phase. This unit 39, in fact, removes any possible entrainments of sludge and particles and residues of oil and organic substances, in particular odorous substances still possibly present.

The water purified by the combined quartzite-activated carbon double-column filtration unit 39 is boosted by means of a pump into a line 41 and feeds the water collection tank 17 for the abatement of the fumes at the service of the two towers 11, 11A, thus creating a closed system and eliminating the necessity of disposing of the process water due to an excess of oily charge.

An oxidizing agent capable of degrading possible organic substances still present, is dosed along the line 41, if necessary.

The sludge produced and contained in the disposal container 36 is disposed of according to the normal regulations in force.

A solution has so far been proposed for the treatment of fumes and water leaving the washing and scrubbing towers, but it was previously specified that the invention also aims at purifying the cooling water and process gases coming directly from the rubber regeneration extruder.

For this purpose, a specific process water treatment and recovery group has been conceived, which is capable of treating the mixture of water and gas coming from the cooling of the extruder 13.

This second process water treatment and recovery group envisages that the water and gas mixture leaving a liquid ring vacuum pump 50 be sent to a separator tank 51 capable of separating water and gas. The process water is collected on the bottom of the separator tank 51 envisaged, and is pumped by a booster pump 52 to a specific collection tank 53 through a stainless steel line 54.

The process gas leaving the separator tank 51 is pushed by means of stainless steel pipes 55 as far as the collection tank 53 where it is bubbled onto the bottom, purifying it additionally.

Oily waste substances accumulate on the surface of the process water contained therein, which are eliminated or disposed of periodically by means of a specific discharge valve 56. Reintegration with clean water coming from an aqueduct is also effected in this collection tank 53, by means of a specific feed schematized in 57. The pH of the water inside the collection tank 53 is regulated by means of a pump 58 which feeds sulfuric acid with the respective pipe 59 and keeps the pH of the water at values considered as being neutral (about 7.0).

A booster pump 60 brings the process water back to the vacuum pump 50, through a stainless steel pipe 61, after cooling in a tube-bundle exchanger 62 with water coming from pipes 63 of cooling towers.

Part of the process water directed towards the vacuum pump 50 is diverted and sent into the fume abatement water tank 17 where it is mixed, as previously indicated, with hydrogen peroxide and deodorant, pumped and atomized inside the pipe or duct 12 where the sucked fumes arrive. The atomized water is collected on the bottom inside the fume abatement tower 11 and thrown back into the tank 17 whereas the purified fumes are expelled to the outside, as already mentioned.

In this way, a complete purification of the secondary products of the regeneration plant of production waste of EPDM vulcanized rubber products (ethylene-propylene-diene polymer), is obtained.

The implementation of the purification group described above offers numerous improvements from an economic point of view and also with respect to the process, solving the technical problems previously indicated.

The advantages are summarized as follows:
1) The abatement process combined with the purification steps guarantees the process efficiency over time.
2) The formation of a closed cycle minimizes the environmental impacts of the company.
3) Maintaining the efficiency of the process reduces the frequency of plant maintenance with significant economic benefits.
4) The disposal only relates to the sludge produced by the filter tape, eliminating problems associated with the process water.
5) There is process automation with fewer controls and reduced costs.
6) There is a reduction in and optimization of the costs relating to the use of reagents.
7) A greater duration is obtained of the mechanical systems subject to wear, due to the aggressiveness of the water (pumps, seals, rotors, fans).
8) There is a reduction in odours and risks relating to olfactory disturbances in the surrounding areas.
9) There is a greater cleaning of the areas surrounding the scrubbers, eliminating risks of contamination of the soil and groundwater.
10) There is a considerable improvement in the safety of the operators involved in the management and maintenance of the plant.

The objective mentioned in the preamble of the description has therefore been achieved.

The forms of the structure for the production of a group according to the present invention, as also the materials and assembly and management modes, can naturally differ from those shown for purely illustrative and non-limiting purposes in the drawings.

The protection scope of the invention is therefore defined by the enclosed claims.

## Claims

1. A plant for the abatement of pollutants in fumes and process water coming from a recycling unit of rubber residues, in particular EPDM (ethylene-propylene-diene polymer) vulcanized rubber, which comprises a first treatment group of the fumes composed of at least one suction hood (14) positioned above at least one extruder (13) for the treatment of recovered EPDM material crushed for the treatment of fumes in at least one washing tower (11, 11A) and a second treatment and recovery group of process water consisting of at least one liquid ring vacuum pump (50) for feeding a mixture of water and gas leaving said extruder (13) towards a separator tank (51) in order to separate water and gas, wherein said washing tower of the scrubber-Venturi type envisages the provision of a Venturi water jet (15) fed by an atomizing pump (16) with water coming from a tank (17) fed at least with water leaving said washing tower (11), a subgroup (28, 35) of the plant also being connected to said tank (17), suitable for purifying the water with separation of the solid phase, and wherein said separator tank (51) is connected to a collection tank (53), in turn connected to said at least one liquid ring vacuum pump (50) and to said tank (17) fed at least with water leaving said washing tower (11), a dosage pump (18) of hydrogen peroxide also being associated with said tank (17), an accumulation tank (25) also being envisaged, connected directly to said subgroup (28, 35) of the plant, suitable for purifying the water, in addition to said tank (17) associated with said at least one washing tower (11, 11A), so as to create a continuous and closed water purification cycle during the abatement activity and regenerating process.

2. The plant according to claim 1, **characterized in that** said subgroup of the plant suitable for purifying the water with separation of the solid phase, is connected to said tank (17) by means of a connection pipe (27) and a booster pump (26) and is composed of a process tank (28) divided into two parts by a septum (29), for subjecting the water to a first oil-removal treatment in a first part of the process tank (28), and for treating the water with a flocculating agent in the second part of the process tank (28), for the removal of the emulsified oily fraction which cannot be removed by simple separation.

3. The plant according to claim 2, **characterized in that** it also comprises a booster pump (34) for sending the sludge produced to a filter tape (35) and to a disposal container (36) with separation of the residual liquid fraction evacuated, sent to said accumulation tank (25) by means of a pipe (32).

4. The plant according to claim 3, **characterized in that** a collection well (33) is interpositioned between said accumulation tank (25) and said pipe (32), associated with a submerged pump (37) connected directly to said accumulation tank (25).

5. The plant according to the previous claims 1 or 2, **characterized in that** a pump (40) is envisaged between said accumulation tank (25) and said tank (17), associated with a combined "quartzite"-activated carbon double-column filtration unit (39).

6. The plant according to the previous claims 1 or 2, **characterized in that** a feeding (57) associated with said collection tank (53) is also envisaged, for reintegration with clean water coming from the aqueduct.

7. The plant according to the previous claims 1 or 2, **characterized in that** a booster pump (60) associated with said collection tank (53) is also envisaged, which sends process water back to said vacuum pump (50) through a pipe (61), after cooling in a tube-bundle exchanger (62) with water coming from pipes (63) of cooling towers.

8. A method for abating pollutants in fumes and process water coming from a recycling unit of rubber residues, in particular EPDM (ethylene-propylene-diene polymer) vulcanized rubber, in a plant according to any one of the previous claims, which comprises a treatment phase of fumes coming from at least one extruder (13) for the treatment of crushed recovered EPDM material and a treatment and recovery phase of process water, also for separating water and treatment gas, comprising the following phases:
- sucking process fumes from said extruder (13) and subjecting them to washing in at least one washing tower (11, 11A) by means of a Venturi water jet (15) fed by an atomizing pump (16) with water coming from a tank (17) fed at least with water leaving said same washing tower (11),
- sending water of said tank (17) to a subgroup (28, 35) of the plant, suitable for purifying the water with separation of the solid phase,
- feeding a mixture of water and gas leaving said extruder (13) by means of at least one liquid ring vacuum pump (50) towards a separator tank (51) in order to separate water and gas,
- feeding water and gas separated in said separator tank (51) to a collection tank (53),
- feeding water from said collection tank (53) to said at least one liquid ring vacuum pump (50) and to said tank (17),
- dosing hydrogen peroxide in said tank (17),
- feeding water from said subgroup (28, 35) to an accumulation tank (25) which, in turn, feeds water to said tank (17) associated with said at least one washing tower (11, 11A), so as to create a continuous and closed water purification cycle during the abatement activity and regenerating process.

9. The method according to claim 8, **characterized in that** said water fed from said tank (17) into a process tank (28), divided into two parts by a septum (29), in which the water is subjected to a first oil-removal treatment in a first part of the process tank (28), in order to remove the most supernatant portion of the oils by separation by density, whereas a dose of denaturing flocculating agent in powder form is added to the water contained in the second part of the process tank (28) and mixed continuously therewith, thus removing the emulsified oily fraction which cannot be removed by simple separation, is subjected to treatment in said subgroup of the plant, suitable for purifying the water with separation of the solid phase.

10. The method according to claim 9, **characterized in that**, after the addition of the flocculating agent, a decanting phase of the treated water is envisaged, in order to allow the sludge separated by gravity on a tilted bottom of the second part of the process tank (28), to settle.

11. The method according to claim 10, **characterized by** sending the sludge separated by gravity to a filter tape (35) which allows the solid fraction (sludge) inside a specific disposal container (36) to be separated from the residual liquid fraction evacuated by a pipe (32).

12. The method according to claim 11, **characterized by** sending the treated water leaving the process tank (28) to a collection well (33) to be subsequently sent into the accumulation tank (25).

13. The method according to claim 12, **characterized by** also sending to said collection well (33), in addition to the water arriving from the process tank (28) and from the filter tape (35) of the part of the plant suitable for water purification, rainwater and water deriving from possible losses or leakages of the plant.

14. The method according to one or more of the previous claims, **characterized by** subjecting said water of said accumulation tank (25) to filtration in a combined "quartzite"-activated carbon double-column filtration unit (39).

15. The method according to any one of the previous claims 8-10, **characterized in that** it also envisages a reintegration feeding with clean water coming from the aqueduct into said collection tank (53).

16. The method according to any one of the previous claims 8-10, **characterized in that** it also envisages sending process water back to said vacuum pump (50) after cooling in a tube-bundle exchanger (62) with water coming from pipes (63) of cooling towers.

## Patentansprüche

1. Anlage für die Minderung von Schmutzstoffen in Rauchgasen und Prozesswasser, die aus einer Recyclingeinheit für Gummirückstände, insbesondere vulkanisiertem EPDM- (Ethylen-Propylen-Dien-Polymer-) Gummi stammen, die eine erste Behandlungsgruppe für Rauchgase, die aus zumindest einer Saughaube (14), die über zumindest einem Extruder (13) für die Behandlung rückgewonnenen EPDM-Materials positioniert ist, das für die Behandlung von Rauchgasen in zumindest einem Waschturm (11, 11A) zerkleinert wird, und eine zweite Behandlungs- und Rückgewinnungsgruppe für Prozesswasser umfasst, die aus zumindest einer Flüssigkeitsringvakuumpumpe (50) zur Zufuhr eines Gemisches aus Wasser und Gas, das den Extruder (13) verlässt, zu einem Separatortank (51) besteht, um Wasser und Gas abzuscheiden, wobei der Waschturm des Wäscher-Venturityps die Bereitstellung eines Venturiwasserstrahls (15) umfasst, der durch eine Zerstäubungspumpe (16) mit Wasser gespeist wird, das von einem Tank (17) stammt, der zumindest mit Wasser gespeist wird, das den Waschturm (11) verlässt, wobei auch eine Untergruppe (28, 35) der Anlage mit dem Tank (17) verbunden ist, die zum Reinigen des Wassers mit Abscheidung der festen Phase geeignet ist, und wobei der Abscheidungstank (51) mit einem Sammeltank (53) verbunden ist, der seinerseits mit der zumindest einen Flüssigkeitsringvakuumpumpe (50) und dem Tank (17) verbunden ist, der zumindest mit Wasser gespeist wird, das den Waschturm (11) verlässt, wobei auch eine Dosierpumpe (18) für Wasserstoffperoxid dem Tank (17) zugeordnet ist, wobei auch ein Akkumulationstank (25) vorgesehen ist, der direkt mit der Untergruppe (28, 35) der Anlage verbunden und zum Reinigen des Wassers zusätzlich zu dem Tank (17) geeignet ist, der dem zumindest einen Waschturm (11, 11A) zugeordnet ist, um so einen kontinuierlichen und geschlossenen Wasserreinigungszyklus während der Minderungsaktivität und des Regenerationsprozesses zu erzeugen.

2. Anlage nach Anspruch 1, **dadurch gekennzeichnet, dass** die Untergruppe der Anlage, die zum Reinigen des Wassers mit Abscheidung der festen Phase geeignet ist, mit dem Tank (17) mittels eines Verbindungsrohres (27) und einer Drucksteigerungspumpe (26) verbunden ist und aus einem Prozesstank (28) besteht, der in zwei Teile durch eine Trennwand (29) geteilt ist, um das Wasser einer ersten Ölentfernungsbehandlung in einem ersten Teil des Prozesstanks (28) zu unterziehen, und um das Wasser mit einem Flockungsmittel in dem zweiten Teil des Prozesstanks (28) für die Entfernung der emulgierten Ölfraktion zu behandeln, die nicht durch einfache Abscheidung entfernt werden kann.

3. Anlage nach Anspruch 2, **dadurch gekennzeichnet, dass** sie auch eine Drucksteigerungspumpe (34) zum Senden des erzeugten Schlamms an ein Filterband (35) und an einen Abfallbehälter (36) mit Trennung der restlichen Flüssigfraktion, die evakuiert ist, umfasst, die an den Akkumulationstank (25) mittels eines Rohres (32) geliefert wird.

4. Anlage nach Anspruch 3, **dadurch gekennzeichnet, dass** ein Sammelschacht (33) zwischen dem Akkumulationstank (25) und dem Rohr (32) angeordnet ist, der einer Tauchpumpe (37) zugeordnet ist, die direkt mit dem Akkumulationstank (25) verbunden ist.

5. Anlage nach einem der Ansprüche 1 oder 2, **dadurch gekennzeichnet, dass** eine Pumpe (40) zwischen dem Akkumulationstank (25) und dem Tank (17) vorgesehen ist, die einer kombinierten "Quarzit"-Aktivkohle-Doppelsäulenfiltrationseinheit (39) zugeordnet ist.

6. Anlage nach einem der Ansprüche 1 oder 2, **dadurch gekennzeichnet, dass** eine Zufuhr (57), die dem Sammeltank (53) zugeordnet ist, ebenfalls zur Wiedervereinigung mit von der Leitung stammendem sauberem Wasser vorgesehen ist.

7. Anlage nach einem der Ansprüche 1 oder 2, **dadurch gekennzeichnet, dass** eine Drucksteigerungspumpe (60), die dem Sammeltank (53) zugeordnet ist, ebenfalls vorgesehen ist, die Prozesswasser zurück zu der Vakuumpumpe (50) durch ein Rohr (61) nach Kühlen in einem Rohrbündelwärmetauscher (62) mit Wasser, das von Rohren (63) von Kühltürmen stammt, gesendet wird.

8. Verfahren zum Mindern von Schmutzstoffen in Rauchgasen und Prozesswasser, die von einer Recyclingeinheit aus Gummiresten stammen, insbesondere vulkanisiertem EPDM-(Ethylen-Propylen-Dien-Polymer-)Gummi in einer Anlage nach einem der vorhergehenden Ansprüche, das eine Behandlungsphase für Rauchgase, die von zumindest einem Extruder (13) zur Behandlung von zerkleinertem rückgewonnenem EPDM-Material stammen, und eine Behandlungs- und Rückgewinnungsphase für Prozesswasser ebenfalls zum Trennen von Wasser und Behandlungsgas umfasst, mit den folgenden Phasen:
- Saugen von Prozessrauchgasen von dem Extruder (13) und Waschen derselben in zumindest einem Waschturm (11, 11A) mittels eines Venturiwasserstrahls (15), der durch eine Zerstäubungspumpe (16) gespeist ist, mit Wasser, das von einem Tank (17) stammt, der zumindest mit Wasser gespeist wird, das den Waschturm (11) verlässt;
- Senden von Wasser des Tanks (17) zu einer Untergruppe (28, 35) der Anlage, die zum Reinigen des Wassers mit Abscheidung der festen Phase geeignet ist,
- Zuführen eines Gemisches aus Wasser und Gas, das den Extruder (13) verlässt, mittels zumindest einer Flüssigkeitsringvakuumpumpe (50) zu einem Abscheidungstank (51), um Wasser und Gas abzuscheiden,
- Zuführen von Wasser und Gas, das in dem Abscheidertank (51) abgeschieden ist, zu einem Sammeltank (53),
- Zuführen von Wasser von dem Sammeltank (53) zu zumindest einer Flüssigkeitsringvakuumpumpe (50) und dem Tank (17),
- Dosieren von Wasserstoffperoxid in dem Tank (17),
- Zuführen von Wasser von der Untergruppe (28, 35) zu einem Akkumulationstank (25), der seinerseits Wasser zu dem Tank (17) speist, das dem zumindest einen Waschturm (11, 11A) zugeordnet ist, um einen kontinuierlichen und geschlossenen Wasserreinigungszyklus während der Minderungsaktivität und dem Regenerationsprozess zu erzeugen.

9. Verfahren nach Anspruch 8, **dadurch gekennzeichnet, dass** das Wasser, das von dem Tank (17) in einen Prozesstank (28) gespeist wird, der durch eine Trennwand (29) in zwei Teile geteilt ist, in welchem das Wasser einer ersten Ölentfernungsbehandlung in einem ersten Teil des Prozesstanks (28) unterzogen wird, um den obersten Anteil der Öle durch Abscheidung über Dichte zu entfernen, während eine Dosis eines vergällten Flockungsmittels in Pulverform dem Wasser hinzugefügt wird, das in dem zweiten Teil des Prozesstanks (28) enthalten ist, und damit kontinuierlich gemischt wird, wodurch die emulgierte Ölfraktion entfernt wird, die nicht durch einfache Trennung entfernt werden kann, einer Behandlung in der Untergruppe der Anlage unterzogen ist, die zum Reinigen des Wassers mit Abscheidung der festen Phase geeignet ist.

10. Verfahren nach Anspruch 9, **dadurch gekennzeichnet, dass** nach dem Zusatz des Flockungsmittels eine Dekantierphase des behandelten Wassers vorgesehen ist, um ein Absetzen des Schlammes, der durch Schwerkraft an einem schräggestellten Boden des Bodenteils des Prozesstanks (28) getrennt ist, zu ermöglichen.

11. Verfahren nach Anspruch 10, **dadurch gekennzeichnet, dass** der Schlamm, der durch Schwerkraft getrennt ist, an ein Filterband (35) geliefert wird, das ein Trennen der festen Fraktion (Schlamm) innerhalb eines spezifischen Abfallbehälters (36) von der restlichen flüssigen Fraktion ermöglicht, die durch ein Rohr (32) evakuiert ist.

12. Verfahren nach Anspruch 11, **dadurch gekennzeichnet, dass** das behandelte Wasser, das den Prozesstank (28) verlässt, zu einem Sammelschacht (33) gesendet wird, um anschließend in den Akkumulationstank (25) gesendet zu werden.

13. Verfahren nach Anspruch 12, **dadurch gekennzeichnet, dass** es auch an den Sammelschacht (33) zusätzlich zu dem Wasser, das von dem Prozesstank (28) und dem Filterband (35) des Teils der Anlage ankommt, das zur Wasserreinigung geeignet ist, Regenwasser und Wasser, das von den möglichen Verlusten oder Leckagen der Anlage abgeleitet ist, gesendet wird.

14. Verfahren nach einem der vorhergehenden Ansprüche, **dadurch gekennzeichnet, dass** das Wasser des Akkumulationstanks (25) einer Filtration in einer kombinierten "Quarzit"-Aktivkohle-Doppelsäulenfiltrationseinheit (39) unterzogen wird.

15. Verfahren nach einem der vorhergehenden Ansprüche 8 - 10, **dadurch gekennzeichnet, dass** es auch eine Wiedervereinigungszufuhr mit reinem Wasser, das von der Leitung stammt, in den Sammelbehälter (53) vorsieht.

16. Verfahren nach einem der vorhergehenden Ansprüche 8 - 10, **dadurch gekennzeichnet, dass** es auch ein Senden von Prozesswasser zurück zu der Vakuumpumpe (50) nach einem Kühlen in einem Rohrbündeltauscher (62) mit Wasser vorsieht, das von Rohren (63) von Kühltürmen stammt.

## Revendications

1. Installation destinée à la dépollution de fumées et d'eau de procédé provenant d'une unité de recyclage de résidus de caoutchouc, en particulier de caoutchouc EPDM (polymère éthylène-propylène-diène) vulcanisé, qui comprend un premier groupe de traitement de fumées, constitué d'au moins une hotte aspirante (14), placée au-dessus d'au moins une extrudeuse (13) servant à traiter du matériau EPDM récupéré broyé, pour traiter les fumées dans au moins une tour de lavage (11, 11A), et un deuxième groupe de traitement et récupération d'eau de procédé, constitué d'au moins une pompe à vide (50) à anneau liquide, servant à envoyer un mélange d'eau et de gaz quittant ladite extrudeuse (13) vers une cuve de séparation (51) où l'eau et le gaz sont séparés, dans laquelle installation ladite tour de lavage, du type épurateur Venturi, fournit un jet d'eau Venturi (15) alimenté, par une pompe pulvérisatrice (16), avec de l'eau venant d'une cuve (17) alimentée avec au moins de l'eau quittant ladite tour de lavage (11), un sous-groupe (28, 35) de l'installation approprié pour la purification de l'eau par séparation de la phase solide étant également raccordé à ladite cuve (17), et dans laquelle ladite cuve de séparation (51) est reliée à un réservoir collecteur (53), lui-même raccordé à ladite pompe à vide (50) à anneau liquide au nombre d'au moins une et à ladite cuve (17) alimentée avec au moins de l'eau quittant ladite tour de lavage (11), étant entendu qu'une pompe doseuse (18) de peroxyde d'hydrogène est elle aussi associée à ladite cuve (17) et qu'il y a également un réservoir accumulateur (25) raccordé directement audit sous-groupe (28, 35) de l'installation approprié pour la purification de l'eau, en plus de ladite cuve (17) associée avec ladite tour de lavage (11, 11A) au nombre d'au moins une, afin que s'établisse un cycle fermé continu de purification d'eau au cours de l'activité de dépollution et du processus de régénération.

2. Installation conforme à la revendication 1, **caractérisée en ce que** ledit sous-groupe de l'installation approprié pour la purification de l'eau par séparation de la phase solide est raccordé à ladite cuve (17) au moyen d'une canalisation de raccordement (27) et d'une pompe d'appoint (26) et se compose d'une cuve de procédé (28) divisée en deux parties par une cloison (29), pour que l'eau soit, dans une première partie de la cuve de procédé (28), soumise à un premier traitement d'élimination d'huile, et pour que l'eau soit, dans la deuxième partie de la cuve de procédé (28), traitée avec un agent de floculation, afin que soit éliminée la fraction huileuse émulsifiée qui ne peut pas être éliminée par simple séparation.

3. Installation conforme à la revendication 2, **caractérisée en ce qu'**elle comporte également une pompe d'appoint (34) qui sert à l'envoi des boues produites vers une bande-filtre (35) et un récipient à rebuts (36), avec séparation de la fraction liquide résiduelle évacuée, envoyée vers ledit réservoir accumulateur (25) par une canalisation (32).

4. Installation conforme à la revendication 3, **caractérisée en ce qu'**un puits de collectage (33) est interposé entre ledit réservoir accumulateur (25) et ladite canalisation (32), et associé avec une pompe immergée (37) reliée directement audit réservoir accumulateur (25).

5. Installation conforme à la revendication 1 ou 2, **caractérisée en ce qu'**il y a une pompe (40) entre ledit réservoir accumulateur (25) et ladite cuve (17), associée avec une unité (39) de filtration combinée sur double colonne de quartzite et charbon actif.

6. Installation conforme à la revendication 1 ou 2, **caractérisée en ce qu'**il y a aussi une alimentation (57) associée avec ledit réservoir collecteur (53), pour renouvellement avec de l'eau propre provenant de l'aqueduc.

7. Installation conforme à la revendication 1 ou 2, **caractérisée en ce qu'**il y a aussi une pompe d'appoint (60) associée audit réservoir accumulateur (53), qui renvoie de l'eau de procédé vers ladite pompe à vide (50) par une canalisation (61), après refroidissement dans un échangeur à faisceau tubulaire (62) avec de l'eau provenant des canalisations (63) des tours de refroidissement.

8. Procédé visant à faire baisser la quantité de polluants dans des fumées et de l'eau de procédé provenant d'une unité de recyclage de résidus de caoutchouc, en particulier de caoutchouc EPDM (polymère éthylène-propylène-diène) vulcanisé, dans une installation conforme à l'une des revendications précédentes, lequel procédé comporte une phase de traitement de fumées provenant d'au moins une extrudeuse (13) servant à traiter du matériau EPDM récupéré broyé, et une phase de traitement et récupération d'eau de procédé, et aussi de séparation d'eau et de gaz de traitement, et comprend les étapes suivantes :
- aspirer les fumées de procédé issues de ladite extrudeuse (13) et les soumettre à un lavage dans au moins une tour de lavage (11, 11A) au moyen d'un jet d'eau Venturi (15) alimenté, par une pompe pulvérisatrice (16), avec de l'eau venant d'une cuve (17) alimentée avec au moins de l'eau quittant ladite tour de lavage (11),
- envoyer l'eau de ladite cuve (17) vers un sous-groupe (28, 35) de l'installation, approprié pour la purification de l'eau par séparation de la phase solide,
- envoyer un mélange d'eau et de gaz quittant ladite extrudeuse (13), au moyen d'au moins une pompe à vide (50) à anneau liquide, vers une cuve de séparation (51), pour séparer l'eau et le gaz,
- envoyer vers un réservoir collecteur (53) l'eau et le gaz séparés dans ladite cuve de séparation (51),
- envoyer de l'eau issue dudit réservoir collecteur (53) vers ladite pompe à vide à anneau liquide (50) au nombre d'au moins une et vers ladite cuve (17),
- introduire une certaine dose de peroxyde d'hydrogène dans ladite cuve (17),
- et envoyer de l'eau issue dudit sous-groupe (28, 35) vers un réservoir accumulateur (25) d'où l'eau est ensuite envoyée vers ladite cuve (17) associée à ladite tour de lavage (11, 11A) au nombre d'au moins une, afin que s'établisse un cycle fermé continu de purification d'eau au cours de l'activité de dépollution et du processus de régénération.

9. Procédé conforme à la revendication 8, **caractérisé en ce que** ladite eau est envoyée depuis ladite cuve (17) dans une cuve de procédé (28), divisée en deux parties par une cloison (29), où l'eau est, dans une première partie de la cuve de procédé (28), soumise à un premier traitement d'élimination d'huile visant à éliminer, par séparation en fonction de la densité, la plus grande partie de l'huile surnageante, tandis qu'un agent dénaturant floculant, à l'état de poudre, est ajouté en quantité dosée et mélangé en continu à l'eau contenue dans la deuxième partie de la cuve de procédé (28), ce qui mène à l'élimination de la fraction huileuse émulsifiée qui ne peut pas être éliminée par simple séparation, l'eau étant ainsi traitée dans ledit sous-groupe de l'installation approprié pour la purification de l'eau par séparation de la phase solide.

10. Procédé conforme à la revendication 9, **caractérisé en ce que**, après l'addition de l'agent floculant, il y a une étape de décantation de l'eau traitée, pour laisser la boue séparée par gravité se déposer sur un fond incliné de la deuxième partie de la cuve de procédé (28).

11. Procédé conforme à la revendication 10, **caractérisé en ce que** la boue séparée par gravité est envoyée vers une bande-filtre (35) qui permet, à l'intérieur d'un récipient à rebuts (36) spécifique, de séparer la fraction solide (boue) d'avec la fraction liquide résiduelle, évacuée par une canalisation (32).

12. Procédé conforme à la revendication 11, **caractérisé en ce que** l'eau traitée quittant la cuve de procédé (28) est envoyée vers un puits de collectage (33) pour être ensuite envoyée vers le réservoir accumulateur (25).

13. Procédé conforme à la revendication 12, **caractérisé en ce que** sont aussi envoyées audit puits de collectage (33), en plus de l'eau venant de la cuve de procédé (28) et de la bande-filtre (35) de la partie de l'installation appropriée pour la purification de l'eau, les eaux de pluie et les eaux issues d'éventuelles pertes et fuites de l'installation.

14. Procédé conforme à l'une ou plusieurs des revendications précédentes, **caractérisé en ce que** ladite eau dudit réservoir accumulateur (25) est soumise à une filtration dans une unité (39) de filtration combinée sur double colonne de quartzite et charbon actif.

15. Procédé conforme à l'une des revendications 8 à 10 précédentes, **caractérisé en ce qu'**on opère aussi une alimentation de renouvellement, avec de l'eau propre provenant de l'aqueduc, dans ledit réservoir collecteur (53).

16. Procédé conforme à l'une des revendications 8 à 10 précédentes, **caractérisé en ce qu'**on opère aussi un renvoi d'eau de procédé vers ladite pompe à vide (50), après refroidissement dans un échangeur à faisceau tubulaire (62) avec de l'eau provenant des canalisations (63) des tours de refroidissement.
